# EUROPÄISCHE PATENTANMELDUNG

(11) **EP 1 384 692 A1**
(43) Veröffentlichungstag der Anmeldung: **28.01.2004**
(21) Anmeldenummer: 03014981.9
(22) Anmeldetag: 02.07.2003
(51) Int. Cl.: B65G 1/02, B65G 1/04

(54) **Lagerregal für Waren oder Warengebinde, wie z. B. beladene Paletten**

(30) Priorität: 27.07.2002 DE 10234360
(71) Anmelder: NEDCON MAGAZIJNINRICHTING B.V., 7005 BJ Doetinchem (NL)
(72) Erfinder: de Jong, Leen-Pieter, 7051 Varsseveld (NL)
(74) Vertreter: Christophersen & Partner

(57) **Zusammenfassung**

Vorgeschlagen wird ein Lagerregal für Waren oder Warengebinde, wie z.B. beladene Paletten. Die Waren sind, über die Regaltiefe betrachtet, auch hintereinander lagerbar. Zur Erzielung einer zusätzlichen Lagertiefe, ohne die Statik der Hubgabel des Regalbediengerätes zu überfordern, ist zusätzlich zu der vordersten und mindestens einer dahinter angeordneten Tiefenposition eine zusätzliche, hinterste Tiefenposition (C) vorgesehen, welche durch das Bediengerät nicht anfahrbar ist. Um gleichwohl auch in dieser hintersten Tiefenposition Waren lagern zu können, sind in dem Regalfach zusätzlich zu einer feststehenden Warenauflage (1) eine bewegliche Warenauflage in Gestalt eines Schlittens (2) angeordnet. Der Schlitten (2) ist zwischen einer vorderen Stellung und einer hinteren Stellung um die Länge einer Tiefenposition verschiebbar. Auf dem Schlitten (2) liegt in seiner hinteren Stellung jene Ware auf, die sich in der hintersten Tiefenposition (C) befindet. Vorzugsweise ist der Schlitten (2) um eine Tiefenposition kürzer als die Gesamtzahl der Tiefenposition (A, B, C) des Regalfachs.

## Beschreibung

Die Erfindung betrifft ein Lagerregal für Waren oder Warengebinde, wie z.B. beladene Paletten, in welchem die Waren innerhalb der Regalebenen sowohl nebeneinander wie auch hintereinander über die Regaltiefe lagerbar sind, wobei für ein dem Lagerregal zugeordnetes Bediengerät sowohl die vorderste wie auch mindestens eine dahinter angeordnete Tiefenposition des jeweiligen Regalfachs anfahrbar ist, um dort eine Ware abzusetzen oder aufzunehmen.

Solche Lagerregale finden sich in erster Linie in Großlagern mit automatisch, rechnergesteuert ein- und auslagerbaren Paletten. Die normgerechten Paletten werden mit Hilfe speziell konstruierter Regalbediengeräte in dem jeweils gewünschten Fach des Regals abgesetzt bzw. daraus wieder entnommen. Hierbei liegen die Paletten auf Profilen auf, die sich in Tiefenrichtung des Regals erstrecken. Bei der Montage der Profile ist ein gewisser vertikaler Freiraum zu beachten, in den die Teleskopgabeln des Bediengerätes beim Einlagern oder Auslagern einfahren können.

Um in Großlagern zu einer verbesserten Ausnutzung der insgesamt zur Verfügung stehenden Grundfläche zu kommen, sind, z.B. aus der EP 0 935 932 B1 bereits Lagerregale mit doppelter Einlagerungstiefe bekannt. Hierbei sind die beladenen Paletten innerhalb der Regalebenen sowohl nebeneinander wie auch hintereinander, d.h. über die Regaltiefe, lagerbar. Eine Lagerung von mehr als zwei Paletten hintereinander über die Regaltiefe scheitert allerdings an den statischen Verhältnissen des Regalbediengerätes. Die hierbei verwendeten, seitlich in die Regale hineinfahrbaren Teleskopgabeln müssen bereits dann, wenn nur in der ersten Tiefenposition ein- oder ausgelagert werden soll, beträchtliche Kipp- und Biegemomente aufnehmen. Um so höher fallen diese Kräfte bei der Ein- und Auslagerung in der dahinter angeordneten, zweiten Tiefenposition des Regalfachs aus. Um auch in eine dritte, nochmals dahinter angeordnete Tiefenposition ein- und auszulagern, müßten die Teleskoparme des Regalbediengerätes außerordentlich schwer und voluminös sein, um die hierbei wirkenden Biegebelastungen, insbesondere bei schwer beladenen Paletten, noch aufnehmen zu können. In der Praxis wird daher eine solche Lösung vermieden und es werden Paletten allenfalls in doppelter Tiefe gelagert.

Der Erfindung liegt die **Aufgabe** zugrunde, ein Lagerregal für Waren oder Warengebinde zu schaffen, mit dem sich durch einfache konstruktive Mittel eine Vergrößerung der Lagertiefe und damit eine verbesserte Ausnutzung der zur Verfügung stehenden Grundfläche eines Regallagers erzielen läßt.

Zur **Lösung** dieser Aufgabe wird bei einem Lagerregal mit den eingangs genannten Merkmalen vorgeschlagen, daß das Regalfach außer der vordersten und der mindestens einen dahinter angeordneten Tiefenposition eine zusätzliche, hinterste Tiefenposition aufweist, welche durch das Bediengerät nicht anfahrbar ist, dass in dem Regalfach eine feststehende Warenauflage sowie eine bewegliche Warenauflage angeordnet sind, wobei die bewegliche Warenauflage ein zwischen einer vorderen Stellung und einer hinteren Stellung um die Länge einer Tiefenposition verschiebbarer Schlitten ist, auf dem in seiner hinteren Stellung jene Ware aufliegt, die sich in der hintersten Tiefenposition befindet.

Ein solches Lagerregal ermöglicht, ohne die Statik des verwendeten Bediengerätes zu überfordern, eine mehr als doppelt tiefe Einlagerung von Waren oder Warengebinden, wie z.B. beladenen Paletten. Insbesondere lassen sich mit dem erfindungsgemäßen Lagerregal Regalfächer mit drei Tiefenpositionen erzielen, d.h. es können insgesamt drei Paletten hintereinander in dem Lagerregal untergebracht werden. Wird hierbei berücksichtigt, dass auf der anderen Seite des vor dem Lagerregal befindlichen Ganges für das Bediengerät ein entsprechendes Lagerregal angeordnet ist, so kann das Bediengerät in jeder Position innerhalb des Fahrganges sowohl auf der einen Seite wie auch auf der anderen Seite in ein dreifach tiefes Regalfach einlagern, d.h. es können insgesamt sechs Paletten untergebracht werden.

Erreicht werden diese Vorteile durch eine Aufteilung der Warenauflagen des Regalfachs. In jedem Regalfach ist eine feststehende Warenauflage sowie eine bewegliche Warenauflage angeordnet, wobei die bewegliche Warenauflage ein verschiebbarer Schlitten ist. Der Schlitten ist zwischen einer vorderen, dem Gang näheren Stellung und einer hinteren Stellung verschiebbar, und zwar um die Länge einer Tiefenposition. Die in der hintersten Tiefenposition des Regalfachs gelagerte Ware liegt hierbei auf dem Schlitten auf, sofern dieser sich in der hinteren seiner beiden möglichen Stellungen befindet. Der Schlitten, welcher vorzugsweise um eine Tiefenposition kürzer als die Gesamtzahl der Tiefenpositionen des Regalfachs ist, ist an seinem vorderen Ende vorzugsweise mit einem Vorsprung versehen. Dieser Vorsprung ragt nach oben über die Auflageebene des Schlittens hinaus und dient der Längsabstützung der in vorderster Position auf dem Schlitten abgesetzten Ware.

Mit einer bevorzugten Weiterbildung wird vorgeschlagen, dass der Schlitten für den freien vertikalen Durchtritt der Hubgabel des Bediengerätes mit in Längsrichtung sich erstreckenden und zur Beschickungsseite des Regals hin offenen Aussparungen versehen ist. Diese Aussparungen ermöglichen den freien vertikalen Durchtritt der Hub- bzw. Teleskopgabel des Bediengerätes, während die jeweilige Ware auf dem Schlitten abgesetzt wird oder von dem Schlitten aufgenommen wird. Eine weitere Ausgestaltung ist gekennzeichnet durch Verwendung eines Bediengerätes, dessen Hubgabel an deren freien Enden mit nach oben ragenden Vorsprüngen versehen ist. Diese Vorsprünge dienen dem teilweisen Hintergreifen der auf der Hubgabel angeordneten Ware. Das Bediengerät kann daher die jeweilige Ware hintergreifen und diese innerhalb des Regalfaches nach vorne ziehen. Diese Bewegung wird mittelbar, nämlich über die so hintergriffene Ware, auch auf den Schlitten übertragen, so dass im Ergebnis die Hubgabel des Bediengerätes dazu genutzt wird, den Schlitten aus seiner hinteren Stellung in seine vordere Stellung zurückzuziehen.

Ferner wird vorgeschlagen, dass der Schlitten mit Mitteln zur Erhöhung des in Längsrichtung wirkenden Schubwiderstandes zwischen seiner Oberseite und der Unterseite der Ware versehen ist, und dass der so erzeugte Schubwiderstand größer als der Verschiebewiderstand des Schlittens ist. Durch diese Ausgestaltung wird der Vorteil erzielt, dass ein Schieben oder Ziehen an der Ware selbst auf den Schlitten, auf dem diese Ware aufliegt, übertragen wird. Zum Verschieben des Schlittens ist es daher nicht erforderlich, an diesem unmittelbar zu ziehen oder ihn unmittelbar zu schieben. Vielmehr kann dies mittelbar über die jeweils auf dem Schlitten aufliegende Ware erfolgen.

Ferner wird vorgeschlagen, dass der Schlitten auf Rollen gelagert in dem Regalfach verschiebbar ist, um so den Verschiebewiderstand des Schlittens innerhalb des Regalfaches möglichst gering zu halten. Um dem Schlitten, sobald sich dieser in seiner vorderen oder seiner hinteren Stellung befindet, eine gewisse Fixierung zu ermöglichen, kann der Schlitten mit Mitteln zur Rollwiderstandserhöhung versehen sein. Der so erzielte, positionsabhängige Rollwiderstand ist geringer als der Reib- oder Schubwiderstand zwischen der Oberseite des Schlittens und der Unterseite der Ware, welche auf dem Schlitten aufliegt.

Weitere Einzelheiten und Vorteile der Erfindung werden nachfolgend anhand eines Ausführungsbeispieles erläutert, das auf der Zeichnung dargestellt ist. Hierbei zeigen die einzelnen Figuren unterschiedliche Stadien des neuartigen Verfahrens zum Ein- und Auslagern von Großgebinden in einem Regallager. Im einzelnen zeigen:
- Fig. 1: Eine Ansicht eines mehrstöckigen Lagerregals für die dreifachtiefe Einlagerung beladener Paletten von der Beschickungsseite des Regals her.
- Fig. 2: Eine Draufsicht auf ein Regalfach zur dreifachtiefen Einlagerung von Paletten.
- Fig. 3-10: Längsansichten des Regalfaches, wobei die Ein- und Auslagerung von Warengebinden in diesem Regalfach in einzelnen, aufeinanderfolgenden Verfahrensstadien dargestellt ist, wobei jede Figur einem dieser Verfahrensstadien entspricht.
- Fig. 11: Eine Draufsicht auf das Regalfach in dem Verfahrensstadium gemäß Fig. 10.
- Fig. 12-14: Weitere Verfahrensstadien des Ein- und Auslagerungsverfahrens.

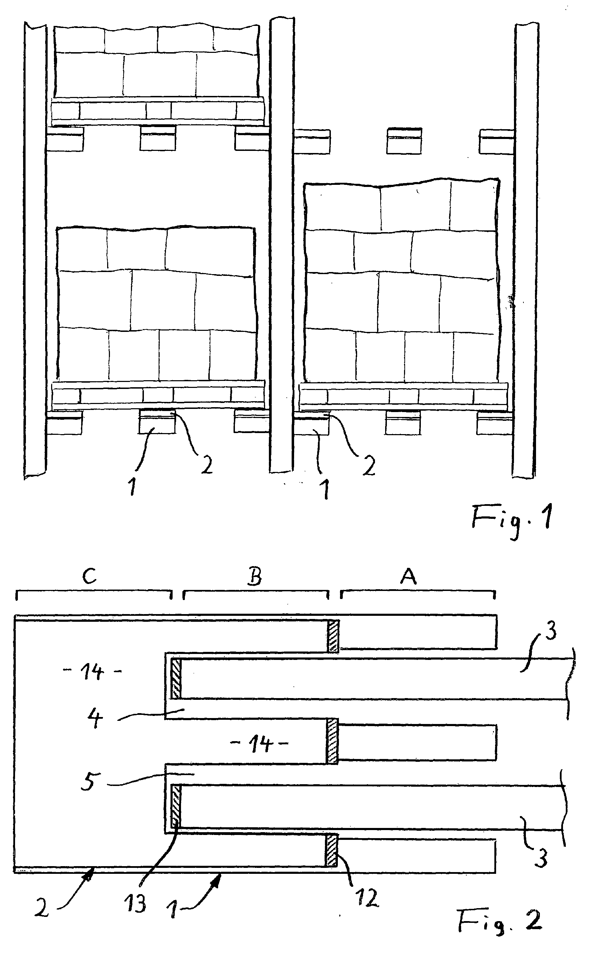

Fig. 1 zeigt in einer Ansicht von der Beschickungsseite her ein Lagerregal, in welchem nebeneinander und übereinander die Regalfächer angeordnet sind. In den Regalfächern werden mit Warengebinden beladene, gleichartige Paletten gelagert, wobei im folgenden für diese beladenen Paletten einheitlich der Begriff "Ware" verwendet werden soll. In jedem der Regalfächer lassen sich hintereinander insgesamt drei Paletten bzw. Waren lagern. Die vorderste Ware befindet sich hierbei in der vordersten Tiefenposition A, die zweite Ware in der Tiefenposition B und die dritte Ware in der hintersten Tiefenposition C des jeweiligen Regalfachs. Diese Tiefenpositionen A, B, C sind in der Draufsicht Fig. 2 bezeichnet. Fig. 2 läßt ferner erkennen, dass das Regalfach über seine Tiefe nicht einheitlich konstruiert ist, sondern die Bereich A, B, C unterschiedlich sind. Denn in dem Regalfach befindet sich eine feststehende Auflage 1 sowie eine bewegliche, als Schlitten 2 ausgebildete Warenauflage. Sowohl die feststehende Warenauflage 1 wie auch der Schlitten 2 sind horizontal, d.h. sie weisen keine Neigung auf. Die feststehende Warenauflage 1 ist entsprechend der üblichen Bauart von Paletten dreigeteilt und erstreckt sich bei dem hier beschriebenen Ausführungsbeispiel über die gesamte Tiefe des Regalfachs. Im Rahmen des erfindungsgemäßen Verfahrens wäre es jedoch bereits ausreichend, wenn die feststehende Warenauflage 1 sich auf den Bereich A der vordersten Tiefenposition beschränkt. Denn nur in dem Bereich A werden Waren unmittelbar auf der feststehenden Warenauflage 1 aufgesetzt.

Werden demgegenüber Waren in der mittleren Tiefenposition B oder in der hintersten Tiefenposition C abgesetzt, so liegen solche Waren stets auf dem längsbeweglichen Schlitten 2 auf und nicht auf der feststehenden Warenauflage 1. Zur Realisierung der Verschiebbarkeit des Schlittens 2 kann dieser, z.B. mittels Rollen, auf der feststehenden Warenauflage 1 entlanglaufen. Alternativ ist es auch möglich, den Schlitten 2 auf einer gesonderten Führungsbahn verschiebbar zu führen. Von Vorteil sind Rastmittel, mit deren Hilfe der Schlitten 2 in beiden Endstellungen leicht einrastet. Diese Rastung läßt sich gegen geringen Widerstand wieder aufheben.

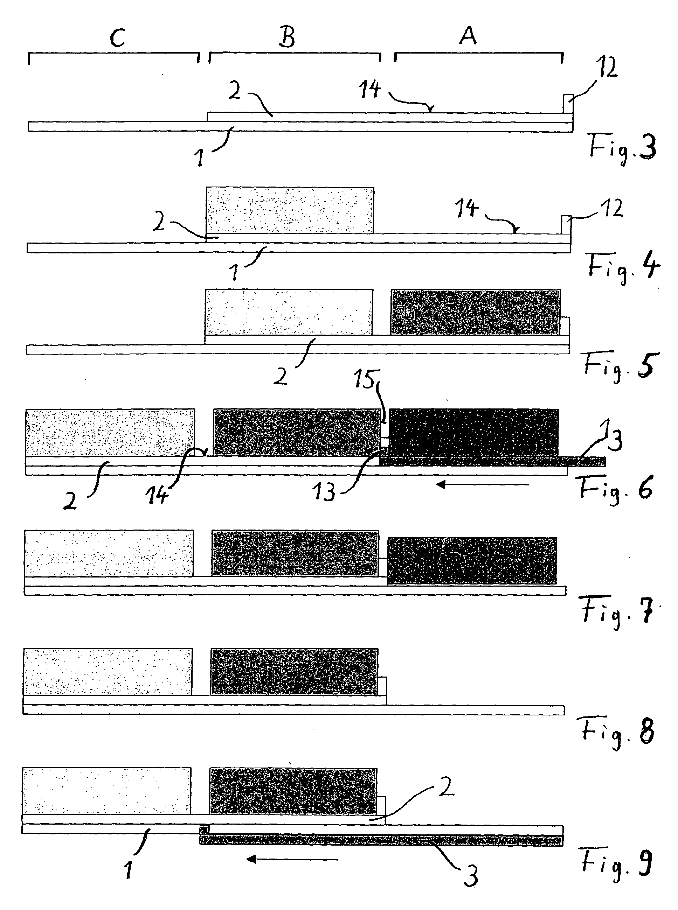

Bei der Draufsicht nach Fig. 2 befindet sich der Schlitten 2 in der hinteren seiner zwei möglichen Stellungen. In dieser hinteren Stellung erstreckt sich der Schlitten 2 über die mittlere Tiefenposition B sowie über die hinterste Tiefenposition C. Die vorderste Tiefenposition A hingegen wird durch die feststehende Warenauflage 1 gebildet. Nimmt der Schlitten 2 hingegen seine vordere Stellung ein, so befindet er sich zugleich in den beiden Bereichen A und B. Diese Stellung des Schlittens 2 ist in Fig. 3 in einer Längsansicht dargestellt. In Fig. 2 ist ferner die Hubgabel 3 eines Regalbediengerätes dargestellt. Bei der Hubgabel 3 handelt es sich, damit diese weit genug in das Regalfach einfahren kann, um eine Teleskopgabel.

Um den Platz für eine vertikale Aufnahme- und Absetzbewegung der Hubgabel 3 zu schaffen, ist der Schlitten 2 in seiner vorderen Hälfte mit in Längsrichtung sich erstreckenden und zur Beschickungsseite des Regals hin offenen Aussparungen 4, 5 versehen. Die eine Aussparung 4 ermöglicht den vertikalen Durchtritt der einen der beiden Hubgabeln, die Aussparung 5 entsprechend für die andere Hubgabel.

Auch die feststehende Warenauflage 1 ist in der Weise, z.B. aus langgestreckten Profilen, konstruiert, dass sie den vertikalen Durchtritt der Hubgabel nicht behindert. Vorzugsweise besteht die feststehende Warenauflage 1 zu diesem Zweck aus insgesamt drei, in Abstand zueinander angeordneten Profilen, deren Oberseite zugleich die Rollbahn für den darauf hinund herbeweglichen Schlitten 2 bilden.

Die Hubgabeln 3 sind an ihren freien Enden mit nach oben ragenden Vorsprüngen 13 zum teilweisen Hintergreifen der auf der Hubgabel 3 angeordneten Ware versehen.

Ähnlich gestaltete Vorsprünge 12 sind an dem vorderen Ende des Schlittens 2 ausgebildet. Die Vorsprünge 12 ragen über die Auflageebene 14 der im übrigen flachen Schlittenoberseite hinaus und dienen der Längsabstützung der sich in vorderster Position auf dem Schlitten 2 befindenden Ware.

Während, wie ebenfalls Fig. 2 erkennen läßt, die vordere Hälfte des Schlittens 2 mit den Aussparungen 4, 5 für die Hubgabel versehen ist, kann die hintere Hälfte des Schlittens 2 vollständig geschlossen sein.

Anhand der Fig. 3-14 wird im Folgenden das neuartige Verfahren zum Ein- und Auslagern von Waren in dreifacher Tiefe beschrieben.

Fig. 3 zeigt das Regalfach in leerem Zustand. Der Schlitten 2 befindet sich in seiner vorderen Stellung, d.h. in den Tiefenpositionen A und B. Wird nun mittels des Bediengerätes eine Ware in das Regalfach eingelagert, so wird diese durch die Hubgabeln des Bediengerätes in der mittleren Tiefenposition B abgesetzt, wie dies Fig. 4 zeigt. Auch hierbei befindet sich der Schlitten 2 in seiner vorderen Stellung. Wird nun eine zweite Ware eingelagert, wird diese von dem Regalbediengerät in der vorderen Tiefenposition A abgesetzt, wie dies Fig. 5 zeigt. Die vordere Stirnfläche 15 dieser Ware befindet sich hierbei möglichst knapp hinter dem Vorsprung 12 des Schlittens. Fig. 5 zeigt sogar eine Anlage der Stirnfläche 15 an der Rückseite des Vorsprungs 12.

Fig. 6 zeigt die Einlagerung einer weiteren, dritten Ware. Hierzu fährt das Bediengerät mit seiner Hubgabel 3 gegen die Stirnfläche 15 der bis dahin in Tiefenposition A befindlichen Ware und schiebt hierbei diese Ware nach hinten. Jedoch nicht nur diese Ware wird nach hinten geschoben, sondern mit ihr zusammen auch der Schlitten 2 sowie die weitere, bis dahin in Tiefenposition B angeordnete Ware. Dieses mittelbare Verschieben des Schlittens 2 durch Druckausübung auf die auf dem Schlitten aufliegende Ware ist möglich, da die Reibung zwischen Ware und Schlitten größer ist, als der Verschiebewiderstand des Schlittens in dem Regalfach. Dies wird vorzugsweise dadurch erreicht, dass der Schlitten 2 auf Rollen gelagert in dem Regalfach bzw. auf der feststehenden Warenauflage 1 verschiebbar ist. Diese Rollenlagerung arbeitet mit so geringen Widerständen, dass es durch einen Druck auf die Ware möglich ist, den Schlitten, auf dem die Ware aufliegt, sowie ggf. die weitere, hinten auf dem Schlitten aufliegende Ware zu verschieben.

In Fig. 6 ist das Ende dieses Verschiebeprozesses dargestellt. Von den insgesamt drei Waren befindet sich die zuerst eingelagerte Ware in Position C, die danach eingelagerte Ware in Position B und die zuletzt eingelagerte Ware in der vorderen Tiefenposition A.

Nachdem gem. Fig. 7 die Hubgabel 3 sich abgesenkt hat, liegt die zuletzt eingelagerte Ware auf der feststehenden Warenauflage 1 auf. Hierdurch befindet sich diese Ware auf einem geringfügig niedrigeren Niveau als die beiden anderen Waren, welche beide auf der Oberseite 14 des Schlittens 2 aufliegen.

Wird nunmehr eine der Waren wieder entnommen, ergibt sich die in Fig. 8 dargestellte Situation. Die hierbei entnommene Ware ist die Ware in der vordersten Tiefenposition A. Bei den übrigen Waren, welche auf dem Schlitten 2 aufliegen, hat sich nichts geändert.

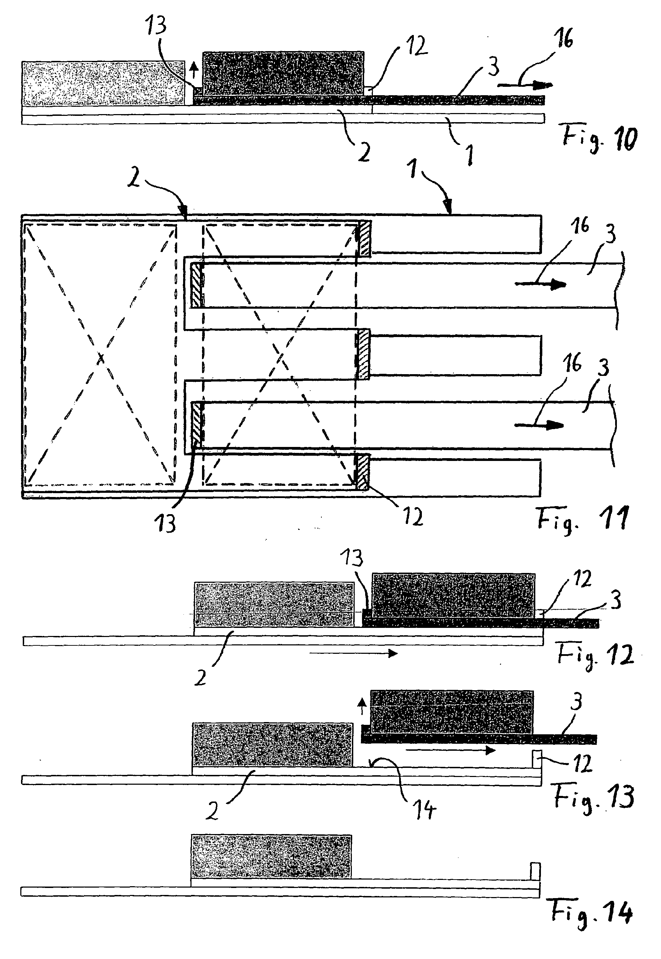

Soll nun eine weitere Ware entnommen werden, muß die Hubgabel, wie Fig. 9 erkennen läßt, bis in die mittlere Tiefenposition B ausgefahren werden. Sodann wird die Hubgabel 3 gem. Fig. 10 angehoben, wobei sie die in mittlerer Tiefenposition B befindliche Ware allenfalls leicht anhebt. Hierbei hintergreift der Vorsprung 13 der Hubgabel 3 diese Ware, während dieselbe Ware sich mit ihrer vorderen Stirnfläche 15 an dem Vorsprung 12 des Schlittens 2 abstützt. Die Ware ist daher in Längsrichtung zwischen den Vorsprüngen 12 und 13 eingeklemmt. Wird nun die Zugkraft 16 auf die Hubgabel 3 ausgeübt, wird durch den Vorsprung 13 die Ware zur Beschickungsseite zurückgezogen. Da sich jedoch dieselbe Ware zugleich an dem Vorsprung 12 abstützt, wirkt die Zugkraft 16 mittelbar auch zum Zurückziehen des Schlittens 2 von seiner hinteren Stellung in seine vordere Stellung. Das Erreichen dieser vorderen Stellung ist in Fig. 12 dargestellt.

Fig. 11 zeigt entsprechend Fig. 10 das mittelbare Zurückziehen des Schlittens über die zwischen den Vorsprüngen 12, 13 eingeklemmte Ware in einer Draufsicht.

Hat gem. Fig. 12 der Schlitten wieder seine vordere Verschiebestellung erreicht, wird die Hubgabel 3 sodann gem. Fig. 13 unter Mitnahme der Ware angehoben. Damit verbleibt gem. Fig. 14 nur noch eine Ware in dem Regalfach. Diese befindet sich in Tiefenposition B auf dem Schlitten, welcher wieder seine ursprüngliche, vordere Stellung eingenommen hat.

Aus der voranstehenden Beschreibung ist ersichtlich, dass Waren in drei Tiefenpositionen hintereinander gelagert werden können, obwohl die Hubgabel 3 des Bediengerätes lediglich bis zu der mittleren Tiefenposition B reicht.

### Bezugszeichenliste

- 1: Feststehende Warenauflage
- 2: Schlitten
- 3: Hubgabel
- 4: Aussparung im Schlitten
- 5: Aussparung im Schlitten
- 12: Vorsprung
- 13: Vorsprung
- 14: Auflageebene
- 15: Stirnfläche
- 16: Zugkraft
- A: Vordere Tiefenposition
- B: Mittlere Tiefenposition
- C: Hinterste Tiefenposition

## Patentansprüche

1. Lagerregal für Waren oder Warengebinde, wie z.B. beladene Paletten, in welchem die Waren innerhalb der Regalebenen sowohl nebeneinander als auch hintereinander über die Regaltiefe lagerbar sind, wobei für ein dem Lagerregal zugeordnetes Bediengerät sowohl die vorderste wie auch mindestens eine dahinter angeordnete Tiefenposition des jeweiligen Regalfachs anfahrbar ist, um dort eine Ware abzusetzen oder aufzunehmen,
**dadurch gekennzeichnet,**
**dass** das Regalfach außer der vordersten (A) und der mindestens einen, dahinter angeordneten Tiefenposition (B) eine zusätzliche, hinterste Tiefenposition (C) aufweist, welche durch das Bediengerät nicht anfahrbar ist,
**dass** in dem Regalfach eine feststehende Warenauflage (1) sowie eine bewegliche Warenauflage angeordnet sind, wobei die bewegliche Warenauflage ein zwischen einer vorderen Stellung und einer hinteren Stellung um die Länge einer Tiefenposition (A, B, C) verschiebbarer Schlitten (2) ist, auf dem in seiner hinteren Stellung jene Ware aufliegt, die sich in der hintersten Tiefenposition (C) befindet.

2. Lagerregal nach Anspruch 1, **dadurch gekennzeichnet, dass** der Schlitten um eine Tiefenposition kürzer als die Gesamtzahl der Tiefenpositionen (A, B, C) des Regalfachs ist.

3. Lagerregal nach Anspruch 1 oder 2, **dadurch gekennzeichnet, dass** sich das Regalfach über drei und dass sich die Länge des Schlittens (2) über zwei Tiefenpositionen erstreckt.

4. Lagerregal nach Anspruch 2 oder 3, **dadurch gekennzeichnet, dass** der Schlitten an seinem vorderen Ende zur Längsabstützung der in vorderster Position auf dem Schlitten (2) abgesetzten Ware mit einem nach oben über die Auflageebene (14) hinausragenden Vorsprung (12) versehen ist.

5. Lagerregal nach einem der vorangehenden Ansprüche, **dadurch gekennzeichnet, dass** sich die Auflageebene (14) des Schlittens (2) auf einem höheren Niveau als die Auflageebene der feststehenden Warenauflage (1) befindet.

6. Lagerregal nach einem der vorangehenden Ansprüche, **dadurch gekennzeichnet, dass** der Schlitten (2) für den freien, vertikalen Durchtritt der Hubgabel (3) des Bediengerätes mit in Längsrichtung sich erstreckenden und zur Beschickungsseite des Regals hin offenen Aussparungen (4, 5) versehen ist.

7. Lagerregal nach einem der vorangehenden Ansprüche, **gekennzeichnet durch** Verwendung eines Bediengerätes, dessen Hubgabel (3) an ihren freien Enden mit nach oben ragenden Vorsprüngen (13) zum teilweisen Hintergreifen der auf der Hubgabel (3) angeordneten Ware versehen ist.

8. Lagerregal nach einem der vorangehenden Ansprüche, **dadurch gekennzeichnet, dass** der Schlitten (2) mit Mitteln zur Erhöhung des in Längsrichtung wirkenden Schubwiderstandes zwischen seiner Oberseite (14) und der Unterseite der Ware versehen ist, und dass der so erzeuge Schubwiderstand größer als der Verschiebewiderstand des Schlittens (2) ist.

9. Lagerregal nach einem der vorangehenden Ansprüche, **dadurch gekennzeichnet, dass** der Schlitten (2) auf Rollen gelagert in dem Regalfach verschiebbar ist.

10. Lagerregal nach Anspruch 9, **dadurch gekennzeichnet, dass** der Schlitten (2) mit zumindest in seiner vorderen Stellung wirksamen Mitteln zur Rollwiderstandserhöhung versehen ist, und dass der so erzeugte Rollwiderstand geringer ist als der Schubwiderstand zwischen der Oberseite (14) des Schlittens (2) und der Unterseite der Ware.
